# FASCICULE DE BREVET EUROPEEN

(11) **EP 1 043 514 B1**
(45) Date de publication et mention de la délivrance du brevet: **02.01.2004**
(21) Numéro de dépôt: 00400928.8
(22) Date de dépôt: 04.04.2000
(51) Int. Cl.: F16F 1/38, F16F 1/387

(54) **Dispositif antivibratoire de reprise de couple**
Drehmomentanlaufsdämpfungsvorrichtung
Torque absorbing damping device

(30) Priorité: 07.04.1999 FR 9904327
(43) Date de publication de la demande: 11.10.2000
(73) Titulaire: HUTCHINSON, 75008 Paris (FR)
(72) Inventeur: Dandre, Jacques, 28200 La Chapelle du Noyer (FR); Salembier, Vincent, 28400 Brunelles (FR); Molet, Jacques, 28160 Gohory (FR)
(74) Mandataire: Bérogin, Francis

(56) Documents cités:
- EP-A- 0 258 103
- EP-A- 0 371 194
- DE-A- 4 215 195
- PATENT ABSTRACTS OF JAPAN vol. 017, no. 455 (M-1466), 20 août 1993 (1993-08-20) & JP 05 104922 A (NISSAN MOTOR CO LTD;OTHERS: 01), 27 avril 1993 (1993-04-27)
- PATENT ABSTRACTS OF JAPAN vol. 1997, no. 01, 31 janvier 1997 (1997-01-31) & JP 08 233006 A (BRIDGESTONE CORP), 10 septembre 1996 (1996-09-10)

## Description

La présente invention est relative aux dispositifs antivibratoires de reprise de couple.

Plus particulièrement, l'invention concerne un dispositif antivibratoire de reprise de couple destiné à relier un moteur à un châssis de véhicule en vue de limiter les débattements du moteur selon au moins une première direction, ce dispositif de reprise de couple comportant :
- des première et deuxième armatures rigides qui sont destinées à être fixées l'une, au moteur et l'autre, au châssis, la deuxième armature délimitant un espace intérieur creux dans lequel est disposée la première armature, avec un certain jeu dans la première direction et dans des deuxième et troisième directions perpendiculaires entre elles et perpendiculaires à ladite première direction,
- un premier ensemble de limitation en élastomère qui est adhéré sur la deuxième armature et interposé entre les première et deuxième armatures pour limiter leurs débattements relatifs dans la première direction, selon un premier sens correspondant à un déplacement subi par le moteur lorsqu'il produit une force motrice, le premier ensemble de limitation présentant une première épaisseur d'élastomère dans l'espace intérieur de la deuxième armature, mesurée selon la première direction,
- et un deuxième ensemble de limitation en élastomère qui est adhéré sur la deuxième armature et interposé entre les première et deuxième armatures pour limiter leurs débattements relatifs dans la première direction, selon un deuxième sens opposé audit premier sens et correspondant au déplacement subi par le moteur lorsqu'il produit une décélération, le deuxième ensemble de limitation présentant une deuxième épaisseur d'élastomère dans l'espace intérieur de la deuxième armature, mesurée selon la première direction.

Dans les dispositifs antivibratoires connus de ce type, les premier et deuxième ensembles de limitation en élastomère sont constitués par deux bras diamétralement opposés qui se rejoignent en une partie centrale surmoulée sur la première armature.

Ces dispositifs antivibratoires connus présentent les inconvénients suivants en fonction de l'orientation des bras par rapport au déplacement :
- lorsque les bras travaillent en cisaillement, les vibrations du moteur par rapport au châssis ne sont pas convenablement filtrées dans la deuxième direction (généralement sensiblement verticale), du fait que le dispositif antivibratoire présente une relativement grande rigidité selon ladite deuxième direction,
- lorsque l'un des bras en élastomère travaille en compression, l'autre bras travaille alors en traction, ce qui est très défavorable pour la résistance à la fatigue de l'élastomère.

De plus, comme le volume disponible pour l'implantation du dispositif antivibratoire est faible, les bras en élastomère sont courts et sont donc particulièrement sollicités, ce qui est également défavorable pour la résistance à la fatigue du dispositif de liaison.

La présente invention a notamment pour but de pallier ces inconvénients.

A cet effet, selon l'invention, un dispositif antivibratoire du genre en question est essentiellement caractérisé :
- en ce que la première armature présente une forme sensiblement aplatie dans les deuxième et troisième directions,
- en ce que la première armature est simplement insérée entre les premier et deuxième ensembles de limita-tion en élastomère, sans adhésion entre la première armature et lesdits premier et deuxième ensembles de limitation,
- et en ce que la première épaisseur d'élastomère est supérieure à la deuxième épaisseur d'élastomère.

Grâce à ces dispositions, chacun des premier et deuxième ensembles de limitation travaille uniquement en compression, ce qui évite les contraintes de traction défavorable pour la résistance fatiguée de l'élastomère.

De plus, le premier ensemble de limitation en élastomère, qui est le plus souvent sollicité, est également celui qui présente la plus grande épaisseur d'élastomère dans la direction principale de débattement, ce qui est favorable pour l'efficacité du dispositif antivibratoire.

Enfin, les vibrations du moteur dans la deuxième direction sont bien filtrées, de même que les vibrations du moteur dans la troisième direction, puisque le dispositif antivibratoire présente une très faible rigidité dans ces directions, du fait :
- de la sollicitation du caoutchouc en cisaillement,
- et de la relativement grande épaisseur d'élastomère du premier ensemble de limitation contre lequel la première armature s'appuie la majeure partie du temps, ce qui confère à ce premier ensemble de limitation une assez bonne flexibilité dans les deuxième et troisième directions.
   On notera que l'absence d'adhésion de la première armature dans les deuxième et troisième directions permet également de mieux s'accommoder des tolérances de montage, notamment dans la troisième direction.
Dans des modes de réalisation préférés de l'invention, on peut éventuellement avoir recours en outre à l'une et/ou à l'autre des dispositions suivantes :
- la première armature est emboîtée entre les premier et deuxième ensembles de limitation en élastomère, au contact de ces premiers et deuxième ensembles de limitation ;
- la première armature est serrée entre les premier et deuxième ensembles de limitation en élastomère, en réalisant ainsi une précontrainte desdits premiers et deuxième ensembles de limitation selon la première direction ;
- la deuxième armature présente une forme annulaire dotée d'une face intérieure qui est tapissée par un corps en élastomère comprenant les premier et deuxième ensembles de limitation ;
- le premier ensemble de limitation est constitué par un bossage en élastomère qui fait saillie dans l'espace intérieur de la deuxième armature selon un axe central parallèle à la première direction ;
- le deuxième ensemble de limitation comporte des deuxième et troisième bossages en élastomère qui font saillie dans l'espace intérieur de la deuxième armature parallèlement à la première direction, à l'opposé du premier bossage, ces deuxième et troisième bossages étant disposés de part et d'autre de l'axe central du premier bossage, et la première armature présentant une forme de tuile cintrée ayant une concavité tournée vers le premier bossage ;
- la première armature présente un alésage qui s'étend dans la troisième direction et qui est destiné à recevoir une tige de support rigide solidaire soit du moteur, soit du châssis, ladite première armature formant, au niveau de cet alésage, un renflement qui fait saillie entre les deuxième et troisième bossages en élastomère, vers une butée en élastomère qui est formée d'une seule pièce avec ces deuxième et troisième bossages et qui est disposée en retrait entre ces bossages ;
- la première armature est réalisée par moulage et comporte des butées qui sont orientées dans deux sens opposés parallèlement à la troisième direction et qui coopèrent avec au moins l'un des premier et deuxième ensemble de limitation en élastomère pour limiter les débattements relatifs des première et deuxième armatures parallèlement à la troisième direction, ces butées étant décalées l'une par rapport à l'autre perpendiculairement à ladite troisième direction de façon que, vues en projection parallèlement à cette troisième direction, lesdites butées ne présentent aucun recouvrement, de sorte que la première armature peut être moulée dans un moule en deux parties et démoulée parallèlement à la troisième direction ;
- les butées encadrent l'un des premier et deuxième ensembles de limitation en élastomère pour limiter les débattements relatifs des première et deuxième armature parallèlement à la troisième direction ;
- les butées sont disposées sur deux faces opposées appartenant à la première armature et coopèrent l'une avec le premier ensemble de limitation en élastomère et l'autre avec le deuxième ensemble de limitation en élastomère pour limiter les débattements relatifs des première et deuxième armatures parallèlement à la troisième direction.

Par ailleurs, l'invention a également pour objet un véhicule automobile comprenant un moteur relié à un châssis par au moins un dispositif de reprise de couple tel que défini ci-dessus.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue schématique d'un moteur de véhicule relié à la caisse dudit véhicule au moyen d'une suspension pendulaire comprenant un dispositif antivibratoire de reprise de couple selon l'invention,
- la figure 2 est une vue en coupe verticale du dispositif de reprise de couple de la figure 1, dans une première forme de réalisation de l'invention,
- la figure 3 est une vue en perspective de l'armature centrale du dispositif de reprise de couple de la figure 2,
- les figures 4 et 5 sont des vues en perspective de l'armature centrale du dispositif de reprise de couple antivibratoire de la figure 1, dans une deuxième forme de réalisation de l'invention,
- et les figures 6 et 7 sont des vues similaires à la figure 5, respectivement dans des troisième et quatrième formes de réalisation de l'invention.

Sur les différentes figures, les mêmes références désignent des éléments identiques ou similaires.

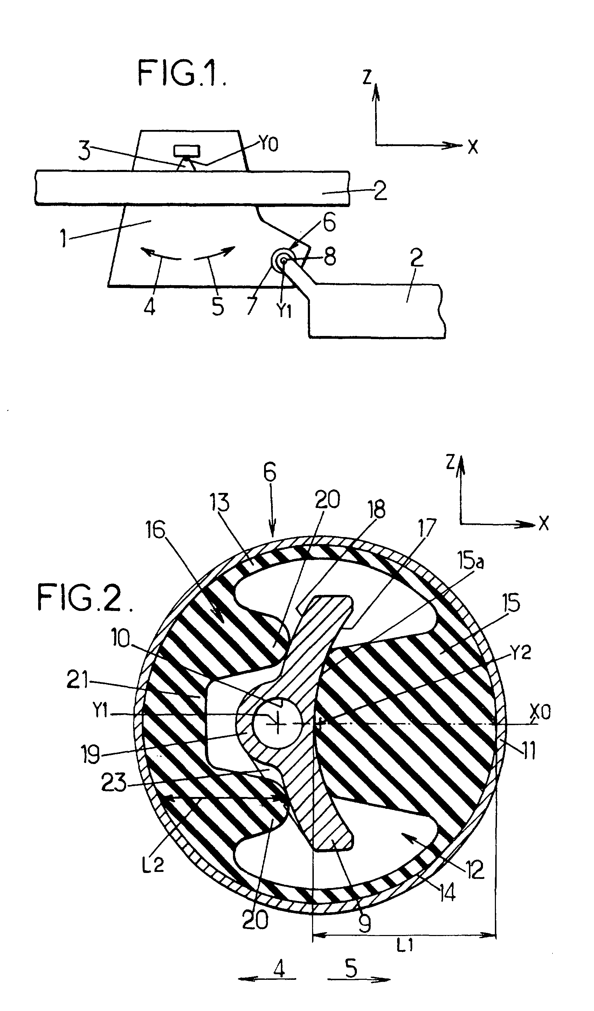

La figure 1 représente schématiquement un moteur de véhicule 1 relié au châssis 2 dudit véhicule au moyen d'une suspension pendulaire comprenant :
- des supports antivibratoires 3, généralement hydrauliques, qui soutiennent le moteur en autorisant des débattements dudit moteur en pivotement autour d'un axe Y0, le moteur 1 se déplaçant selon un premier sens 4 lorsque le moteur produit une force motrice, et selon un deuxième sens 5 opposé au premier sens 4 lorsque le moteur produit une décélération du véhicule,
- et au moins un dispositif de liaison antivibratoire 6 de reprise de couple qui limite ces débattements. Ce dispositif de liaison 6 se présente de préférence sous la forme d'un manchon qui est emboîté sans jeu dans un logement cylindrique 7 solidaire du moteur et qui est relié au châssis du véhicule par l'intermédiaire d'une tige de support 8 s'étendant selon un axe Y1 parallèle à l'axe Y0 susmentionné.

Le logement 7 est disposé à un emplacement tel que les déplacements du moteur dans les sens 4 et 5 susmentionnés se traduisent par des débattements du logement 7 dans une première direction X de préférence sensiblement horizontale.

Bien entendu, le dispositif de liaison 6 pourrait également être monté sur une tige de support 8 solidaire du moteur 1, dans un logement 7 solidaire du châssis 2. Comment représenté plus en détail sur la figure 2, le dispositif de liaison antivibratoire 6 comporte :
- une première armature métallique 9 rigide qui comporte un alésage central 10 s'étendant selon l'axe Y1 et adapté pour recevoir la tige de support 8, cette première armature présentant de préférence une forme sensiblement aplatie parallèlement à l'axe Y1 et à une deuxième direction Z (de préférence sensiblement verticale) qui est perpendiculaire à la première direction X et à l'axe Y1,
- une deuxième armature métallique 11 rigide qui présente de préférence une forme annulaire délimitant un espace intérieur creux 12 dans lequel est disposée la première armature 9 avec un certain jeu selon les première et deuxième directions X, Z, cette deuxième armature 11 présentant de préférence une forme cylindrique centrée sur un axe Y2 décalé par rapport à l'axe Y1 susmentionné,
- et un corps en élastomère 13 qui tapisse la face intérieure 14 de la deuxième armature 11 en étant adhérisé à cette face intérieure, le corps en élastomère 13 formant des premier et deuxième ensembles de limitation 15, 16 en élastomère qui limitent les débattements de la deuxième armature 11 respectivement dans les premier et deuxième sens 4, 5 (le premier ensemble de limitation 15 travaille ainsi lorsque le moteur 1 produit une force motrice, tandis que le deuxième ensemble de limitation 16 travaille lorsque le moteur 1 freine le véhicule).

De préférence, le premier ensemble de limitation en élastomère 15 se présente sous la forme d'un bossage unique qui fait saillie dans l'espace intérieur creux 12 dans le sens 4, jusqu'à une face d'extrémité 15a convexe disposée au contact d'une première face 17 de la première armature 9. Ce bossage 15 s'étend selon un axe central X0 parallèle à l'axe X et présente une épaisseur L1 d'élastomère dans l'espace intérieur 12, mesurée selon l'axe X0.

La première armature 9 a de préférence la forme d'une tuile cintrée, de façon que la première face 17 de cette armature présente une forme concave ayant une concavité tournée vers le bossage 15 et ayant une forme complémentaire de la face d'extrémité 15a. Avantageusement, la première face 17 de l'armature 9 présente la forme d'une portion de cylindre de révolution centrée sur un axe parallèle à l'axe Y1 et coupant l'axe horizontal X0.

Par ailleurs, la première armature 9 présente une deuxième face 18, convexe, qui est orientée à l'opposé de la première face 17 et qui est en majeure partie sensiblement parallèle à la première face 17. Au niveau de l'alésage 10, la deuxième face 18 présente un renflement 19 qui forme une nervure parallèle a l'axe Y1 et qui fait saillie dans le sens 4 parallèlement à la direction X.

Cette deuxième face 18 de l'armature 9 est au contact de deux bossages 20 en élastomère appartenant au deuxième ensemble de limitation 16, chacun de ces bossages 20 faisant saillie dans l'espace intérieur 12 de la deuxième armature parallèlement à la direction X, dans le sens 5, et ces bossage 20 étant décalés respectivement au dessus et au dessous de l'axe central X0 du bossage 15.

L'armature 9 se trouve ainsi montée dans l'armature 11 par simple emboîtement entre les bossages 15 et 20, éventuellement avec un certain serrage produisant une précontrainte des bossages 15, 20 dans la direction X.

Chacun des bossages 20 présente une épaisseur d'élastomère L2 parallèlement à la direction X, à partir de l'armature 11. Cette épaisseur L2 est inférieure à l'épaisseur L1 susmentionnée, ce qui n'est pas gênant dans la mesure où le bossage 15 est beaucoup plus sollicité que les bossages 20.

On notera toutefois que, grâce à la forme cintrée de l'armature 9 et au décalage des bossages 20 par rapport à l'axe central du bossage 15, l'épaisseur d'élastomère L2 des bossages 20 est malgré tout relativement importante. Par ailleurs, l'ensemble de limitation 16 en élastomère comporte en outre une butée 21 constituée par une partie relativement épaisse du corps en d'élastomère. Cette butée 21 est disposée entre les bossages 20 en regard du renflement 19 de l'armature 9, pour coopérer avec ce renflement en fin de course de l'armature 11 dans le sens 5.

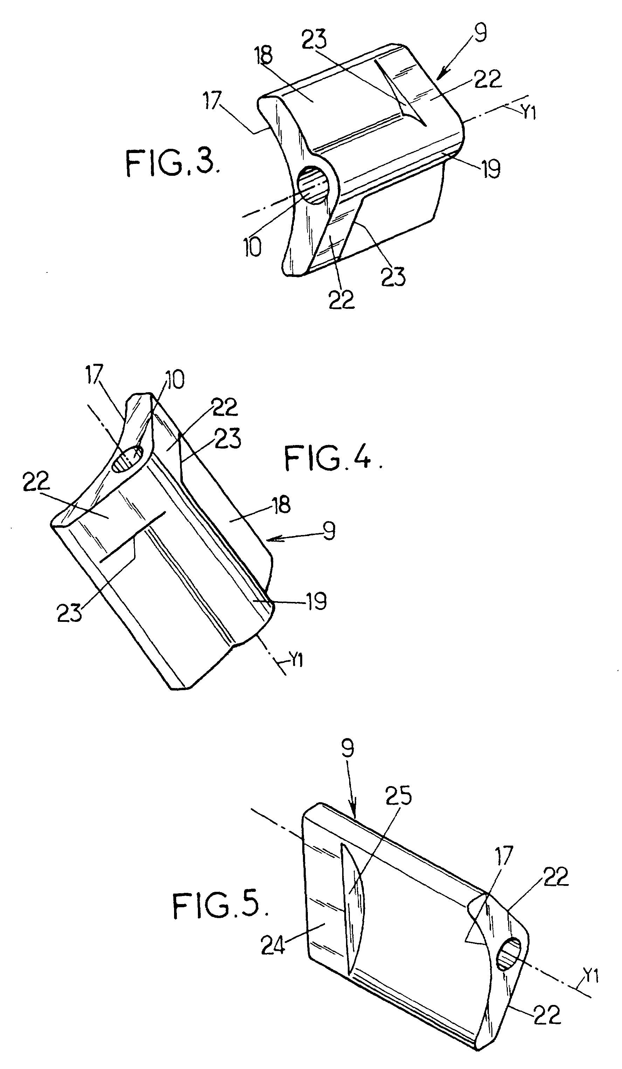

Enfin, comme représenté sur les figures 2 et 3, la deuxième face 18 de l'armature 9 comporte deux parties saillantes 22 disposées respectivement aux deux extrémités de l'armature 9 selon l'axe Y1. Ces parties saillantes forment des butées 23 adaptées pour coopérer respectivement avec les bossage 20 afin de limiter les déplacements de la première armature 9 parallèlement à l'axe Y1.

De préférence, l'armature 9 est réalisée par moulage, notamment en alliage léger, et les deux parties saillantes 22 sont décalées l'une par rapport à l'autre perpendiculairement à l'axe Y1 de façon à simplifier au maximum le moule utilisé pour réaliser l'armature 9 (l'armature 9 peut en effet être alors réalisée dans un moule en deux parties).

En particulier, comme on peut le voir sur la figure 3, les deux parties saillantes 22 peuvent être disposé l'une, au dessus du renflement 19 et l'autre, au dessous du renflement 19, chacune des butées 23 coopérant avec un seul des bossages 20.

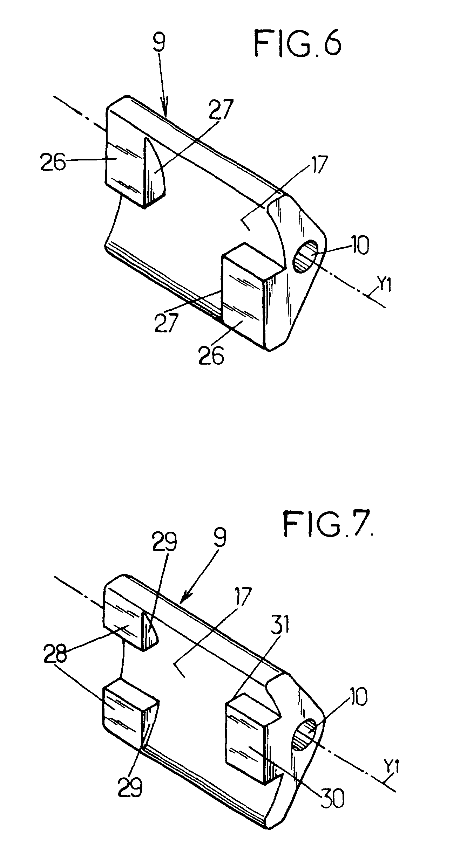

En variante, comme représenté sur les figures 4 et 5, la deuxième face 18 de l'armature 9 pourrait comporter deux parties saillantes 22 similaires à celles décrites précédemment, mais formées à une même extrémité de ladite armature, ces parties saillantes étant disposées respectivement au dessus et au dessous du renflement 19, et les butées 23 de ces parties saillantes coopérant avec les bossages 20 pour limiter le déplacement de l'armature 9 parallèlement à l'axe Y1 uniquement dans un sens.

Dans ce cas, la première face 17 de l'armature 9 comporte alors, à l'extrémité qui est opposée aux parties saillantes 22, un méplat 24 qui forme une butée 25 orientée parallèlement à l'axe Y1 dans le sens opposé aux butées 23 susmentionnés. Cette butée 25 coopère avec le bossage 15 pour limiter le déplacement de l'armature 9 parallèlement à l'axe Y1, dans le sens opposé à la direction d'action des butées 23.

Selon une autre variante, représentée sur la figure 6, la première face 17 de l'armature 9 pourrait également comporter uniquement deux parties saillantes 26 décalées verticalement et formant deux butées 27 opposées orientées parallèlement à l'axe Y1, qui coopèrent avec le bossage 15 pour limiter les débattements de l'armature 11 parallèlement à l'axe Y1.

Dans ce cas, du fait que les parties saillantes 26 sont décalées perpendiculairement à l'axe Y1, c'est-à-dire du fait que lesdites parties saillantes 26, vues en projection parallèlement à l'axe Y1, ne se recouvrent pas l'une l'autre, on peut utiliser un moule simple en deux parties pour réaliser l'armature 9.

Selon encore une autre variante, représentée sur la figure 7, la première face 17 de l'armature 9 pourrait comporter :
- deux parties saillantes 28 à l'une de ses extrémités longitudinales, ces parties saillantes délimitant des faces de butée 29 orientées parallèlement à l'axe Y1, les parties saillantes 28 étant disposées près des extrémités supérieure et inférieure de l'armature 9,
- et une partie saillante 30 disposée à l'extrémité longitudinale opposée de l'armature 9, cette partie saillante délimitant une face de butée 31 qui est orientée parallèlement à l'axe Y1 et en regard des butées 29 susmentionnées, la partie saillante 30 étant disposée sensiblement au niveau de l'alésage 10 de l'armature 9, et les butées 29,31 coopérant avec le bossage 15 en élastomère pour limiter les débattements de l'armature 11 parallèlement à l'axe Y1.

Dans cette variante, la partie saillante 30 est décalée verticalement par rapport aux parties saillantes 28, c'est-à-dire qu'elle ne recouvre pas les parties saillantes 28 lorsqu'elle est vue en projection parallèlement à l'axe Y1, de façon que l'armature 9 puisse être moulée dans un moule simple en deux parties.

## Revendications

1. Dispositif antivibratoire de reprise de couple destiné à relier un moteur ( 1 ) à un châssis (2) de véhicule en vue de limiter les débattements du moteur selon au moins une première direction (X), ce dispositif de reprise de couple comportant :
- des première et deuxième armatures rigides (9, 11) qui sont destinées à être fixées, l'une, au moteur et, l'autre, au châssis, la deuxième armature (11) délimitant un espace intérieur creux (12) dans lequel est disposée la première armature (9), avec un certain jeu dans la première direction (X) et dans des deuxième et troisième directions (Z, Y1) perpendiculaires entre elles et perpendiculaires à ladite première direction,
- un premier ensemble de limitation (15) en élastomère qui est adhéré sur la deuxième armature (11) et interposé entre les première et deuxième armatures pour limiter leurs débattements relatifs dans la première direction (X), selon un premier sens (4) correspondant à un déplacement subi par le moteur (1) lorsqu'il produit une force motrice, le premier ensemble de limitation (15) présentant une première épaisseur d'élastomère (L1) dans l'espace intérieur (12) de la deuxième armature, mesurée selon la première direction (X),
- et un deuxième ensemble de limitation (16) en élastomère qui est adhéré sur la deuxième armature (11) et interposé entre les première et deuxième armatures (9, 11) pour limiter leurs débattements relatifs dans la première direction (X), selon un deuxième sens (5) opposé audit premier sens et correspondant au déplacement subi par le moteur (1) lorsqu'il produit une décélération, le deuxième ensemble de limitation (16) présentant une deuxième épaisseur d'élastomère (L2) dans l'espace intérieur (12) de la deuxième armature, mesurée selon la première direction,
**caractérisé en ce que** la première armature (9) présente une forme sensiblement aplatie dans les deuxième et troisième directions (Z,Y1),
**en ce que** la première armature (9) est simplement insérée entre les premier et deuxième ensembles de limitation (15, 16) en élastomère, sans adhésion entre la première armature et lesdits premier et deuxième ensembles de limitation,
et **en ce que** la première épaisseur d'élastomère (L1) est supérieure à la deuxième épaisseur d'élastomère (L2).

2. Dispositif selon la revendication 1, dans lequel la première armature (9) est emboîtée entre les premier et deuxième ensembles de limitation (15, 16) en élastomère, au contact de ces premiers et deuxième ensembles de limitation.

3. Dispositif selon la revendication 2, dans lequel la première armature (9) est serrée entre les premier et deuxième ensembles de limitation (15, 16) en élastomère, en réalisant ainsi une précontrainte desdits premiers et deuxième ensembles de limitation selon la première direction (X).

4. Dispositif selon l'une quelconque des revendications précédentes, dans lequel la deuxième armature (11) présente une forme annulaire dotée d'une face intérieure (14) qui est tapissée par un corps en élastomère (13) comprenant les premier et deuxième ensembles de limitation (15, 16) .

5. Dispositif selon la revendication 4, dans lequel le premier ensemble de limitation (15) est constitué par un bossage en élastomère qui fait saillie dans l'espace intérieur (12) de la deuxième armature selon un axe central (X0) parallèle à la première direction.

6. Dispositif selon la revendication 5, dans lequel le deuxième ensemble de limitation (16) comporte des deuxième et troisième bossages en élastomère (20) qui font saillie dans l'espace intérieur (12) de la deuxième armature parallèlement à la première direction (X), à l'opposé du premier bossage (15), ces deuxième et troisième bossages étant disposés de part et d'autre de l'axe central (X0) du premier bossage, et la première armature (9) présentant une forme de tuile cintrée ayant une concavité tournée vers le premier bossage.

7. Dispositif selon la revendication 6, dans lequel la première armature présente un alésage (10) qui s'étend dans la troisième direction (Y1) et qui est destiné à recevoir une tige de support rigide (8) solidaire soit du moteur (1), soit du châssis (2), ladite première armature formant, au niveau de cet alésage, un renflement (19) qui fait saillie entre les deuxième et troisième bossages en élastomère (20), vers une butée en élastomère (21) qui est formée d'une seule pièce avec ces deuxième et troisième bossages et qui est disposée en retrait entre ces bossages.

8. Dispositif selon l'une quelconque des revendications précédentes, dans lequel la première armature (9) est réalisée par moulage et comporte des butées (23,25,27,29,31) qui sont orientées dans deux sens opposés parallèlement à la troisième direction (Y1) et qui coopèrent avec au moins l'un des premier et deuxième ensemble de limitation en élastomère (15, 16) pour limiter les débattements relatifs des première et deuxième armatures parallèlement à la troisième direction, ces butées étant décalées l'une par rapport à l'autre perpendiculairement à ladite troisième direction de façon que, vues en projection parallèlement à cette troisième direction, lesdites butées ne présentent aucun recouvrement, de sorte que la première armature (9) peut être moulée dans un moule en deux parties et démoulée parallèlement à la troisième direction.

9. Dispositif selon la revendication 8, dans lequel les butées (23,27,29,31) encadrent l'un des premier et deuxième ensembles de limitation en élastomère (15,16) pour limiter les débattements relatifs des première et deuxième armature parallèlement à la troisième direction (Y1).

10. Dispositif selon la revendication 8, dans lequel les butées (23,25) sont disposées sur deux faces opposées (17,18) appartenant à la première armature et coopèrent l'une avec le premier ensemble de limitation en élastomère (15) et l'autre avec le deuxième ensemble de limitation en élastomère (16) pour limiter les débattements relatifs des première et deuxième armatures parallèlement à la troisième direction (Y1).

11. Véhicule automobile comprenant un moteur (1) relié à un châssis (2) par au moins un dispositif de reprise de couple (6) selon l'une quelconque des revendications précédentes.

## Patentansprüche

1. Antivibrationsvorrichtung zur Wiederherstellung des Drehmoments, bestimmt für die Verbindung eines Motors (1) mit einem Fahrgestell (2) eines Fahrzeugs im Hinblick auf die Begrenzung der Bewegungen des Motors in zumindest einer ersten Richtung (X), wobei die Vorrichtung zur Wiederherstellung des Drehmoments umfasst:
- erste und zweite starre Verstärkungen (9, 11), die dazu bestimmt sind, die eine am Motor und die andere am Fahrgestell befestigt zu werden, wobei die zweite Befestigung (11) einen hohlen Innenraum (12) begrenzt, in welchem die erste Befestigung (9) angeordnet ist, mit einem gewissen Spiel in der ersten Richtung (X) und in der zweiten und dritten Richtung (Z, Y1), welche senkrecht zueinander und senkrecht zu der ersten Richtung sind,
- eine erste Elastomer-Begrenzungseinheit (15), die auf der zweiten Verstärkung (11) haftet und zwischen der ersten und zweiten Verstärkung angeordnet ist, um deren Relativbewegungen in der ersten Richtung (X) in einer ersten Richtung (4) zu begrenzen, welche einer von dem Motor (1) bei der Erzeugung einer antreibenden Kraft erfahrenen Verlagerung entspricht, wobei die erste Begrenzungseinheit (15) eine erste Elastomer-Dicke (L1) in dem Innenraum (12) der zweiten Verstärkung aufweist, gemessen in der ersten Richtung (X),
- und eine zweite Elastomer-Begrenzungseinheit (16), die auf der zweiten Verstärkung (11) haftet und zwischen der ersten und zweiten Verstärkung (9, 11) angeordnet ist, um deren Relativbewegungen in der ersten Richtung (X) in einer zweiten Richtung (5), der ersten Richtung entgegengesetzt und der von dem Motor (1) bei der Erzeugung einer Verlangsamung erfahrenen Verlagerung entsprechend, zu begrenzen, wobei die zweite Begrenzungseinheit (16) eine zweite Elastomer-Dicke (L2) in dem Innenraum (12) der zweiten Verstärkung aufweist, gemessen in der ersten Richtung,
**dadurch gekennzeichnet, dass** die erste Verstärkung (9) eine im wesentlichen flache Form in der ersten und zweiten Richtung (Z, Y1) aufweist, und
**dadurch dass** die erste Verstärkung (9) einfach zwischen die erste und zweite Elastomer-Begrenzungseinheit (15, 16) eingefügt ist, ohne Haftung zwischen der ersten Verstärkung und der ersten und zweiten Begrenzungseinheit, und
**dadurch dass** die erste Elastomer-Dicke (L1) größer ist als die zweite Elastomer-Dicke (L2).

2. Vorrichtung nach Anspruch 1, in der die erste Verstärkung (9) zwischen der ersten und zweiten Elastomer-Begrenzungseinheit (15, 16) eingepasst ist, in Berührung mit der ersten und zweiten Begrenzungseinheit.

3. Vorrichtung nach Anspruch 2, in der die erste Verstärkung (9) zwischen der ersten und zweiten Elastomer-Begrenzungseinheit (15, 16) eingespannt ist und dadurch eine Vorspannung auf die erste und zweite Begrenzungseinheit in der ersten Richtung (X) ausübt.

4. Vorrichtung nach einem der vorhergehenden Ansprüche, in der die zweite Verstärkung (11) ringförmig ist und eine Innenseite (14) aufweist, die einen Elastomer-Körper (13) einfasst, welcher die erste und zweite Begrenzungseinheit (15, 16) umfasst.

5. Vorrichtung nach Anspruch 4, in der die erste Begrenzungseinheit (15) aus einem Elastomer-Vorsprung besteht, der in den Innenraum (12) der zweiten Verstärkung entlang einer zentralen Achse (X0), parallel zu der ersten Richtung, hineinragt.

6. Vorrichtung nach Anspruch 5, in der die zweite Begrenzungseinheit (16) zweite und dritte Elastomer-Vorsprünge (20) aufweist, die in den Innenraum (12) der zweiten Verstärkung, parallel zu der ersten Richtung (X), entgegengesetzt zu dem ersten Vorsprung (15), hineinragt, wobei der zweite und dritte Vorsprung auf beiden Seiten der zentralen Achse (X0) des ersten Vorsprungs angeordnet sind und die erste Verstärkung (9) die Form eines gekrümmten Ziegels aufweist mit einer auf den ersten Vorsprung gerichteten Wölbung.

7. Vorrichtung nach Anspruch 6, in der die erste Verstärkung eine Bohrung (10) aufweist, die sich in der dritten Richtung (Y1) erstreckt und dazu vorgesehen ist, eine starre Haltestange (8) aufzunehmen, die einstückig ausgebildet ist sowohl mit dem Motor (1) als auch mit dem Fahrgestell (2), wobei die erste Verstärkung auf Höhe der Bohrung eine Wulst (19) bildet, die zwischen dem zweiten und dritten Elastomer-Vorsprung (20) hervorragt, in Richtung auf einen Elastomer-Anschlag (21), der einstückig mit dem zweiten und dritten Vorsprung ausgebildet ist und eingebettet zwischen diesen Vorsprüngen angeordnet ist.

8. Vorrichtung nach einem der vorangehenden Ansprüche, in der die erste Verstärkung (9) durch Formen hergestellt wird und die Anschläge (23, 25, 27, 29, 31) umfasst, die in zwei entgegengesetzte Richtungen, parallel zu der dritten Richtung (Y1), ausgerichtet sind und mit mindestens einer der ersten und zweiten Elastomer-Begrenzungseinheit (15, 16) zusammenwirken, um die Relativbewegungen der ersten und zweiten Verstärkung parallel zu der dritten Richtung zu begrenzen, wobei die Anschläge zueinander versetzt sind, senkrecht zu der dritten Richtung, derart dass diese Anschläge, parallel gesehen zu der dritten Richtung, keinerlei Überlappung aufweisen, so dass die erste Verstärkung (9) in einer zweiteiligen Form geformt und parallel zu der dritten Richtung entformt werden kann.

9. Vorrichtung nach Anspruch 8, in der die Anschläge (23, 27, 29, 31) eine der ersten und zweiten Elastomer-Begrenzungseinheiten (15, 16) umranden, um die Relativbewegungen der ersten und zweiten Verstärkung parallel zu der dritten Richtung (Y1) zu begrenzen.

10. Vorrichtung nach Anspruch 8, in der die Anschläge (23, 25) auf zwei entgegengesetzten, zu der ersten Verstärkung gehörenden Seiten (17, 18) angeordnet sind und von denen einer mit der ersten Elastomer-Begrenzungseinheit (15) und der andere mit der zweiten Elastomer-Begrenzungseinheit (16) zusammenwirkt, um die Relativbewegungen der ersten und zweiten Verstärkung parallel zu der dritten Richtung (Y1) zu begrenzen.

11. Kraftfahrzeug, umfassend einen Motor (1), der mit einem Fahrgestell (2) durch mindestens eine Drehzahlwiederherstellungsvorrichtung (6) nach einem der vorangehenden Ansprüche verbunden ist.

## Claims

1. An anti-vibration torque damping device, designed to couple an engine (1) with a motor vehicle chassis (2) with a view to limiting displacements of the engine in at least a first direction (X), this torque damping device comprising :
- first and second rigid reinforcements (9, 11), which are designed to be fixed one to the engine and the other to the chassis, the second reinforcement (11) defining a hollow interior space (12) in which the first reinforcement (9) is disposed with a certain amount of clearance in the first direction (X) and in second and third directions (Z, Y1) perpendicular to one another and to said first direction,
- a first elastomer limiting unit (15) which is bonded onto the second reinforcement (11) and inserted between the first and second reinforcements in order to restrict their relative displacement in the first direction (X), depending on a first (4) direction corresponding to a displacement to which the engine (1) is subjected when it produces a driving force, the first limiting unit (15) having a first thickness of elastomer (L1) in the interior space (12) of the second reinforcement as measured in the first direction (X),
- and a second elastomer limiting unit (16) which is bonded onto the second reinforcement (11) and inserted between the first and second reinforcements (9, 11) in order to limit their relative displacement in the first direction (X), depending on a second direction (5) opposite said first direction and corresponding to the displacement to which the engine (1) is subjected when it produces a deceleration, the second limiting unit (16) having a second thickness of elastomer (L2) in the interior space (12) of the second reinforcement, measured in the first
**characterised in that** the first reinforcement (9) is of a substantially flat shape in the second and third directions (Z,Y1),
**in that** the first reinforcement (9) is simply inserted between the first and second elastomer limiting units (15, 16) without any bonding between the first reinforcement and said first and second limiting units,
and **in that** the first elastomer thickness (L1) is greater than the second elastomer thickness (L2).

2. A device as claimed in claim 1, in which the first reinforcement (9) is disposed in a nest-fit between the first and second elastomer limiting units (15, 16) in contact with these first and second limiting units.

3. A device as claimed in claim 2, in which the first reinforcement (9) is clamped between the first and second elastomer limiting units (15, 16) thereby applying an initial stress to said first and second limiting units in the first direction (X).

4. A device as claimed in any one of the preceding claims, in which the second reinforcement (11) is annular in shape having an interior face (14) lined with an elastomer body (13) comprising the first and second limiting units (15, 16).

5. A device as claimed in claim 4, in which the first limiting unit (15) consists of an elastomer lobe which projects into the interior space (12) of the second reinforcement along a central axis (X0) parallel with the first direction.

6. A device as claimed in claim 5, in which the second limiting unit (16) comprises second and third elastomer lobes (20) which project into the interior space (12) of the second reinforcement parallel with the first direction (X), opposite the first lobe (15), these second and third lobes being arranged on either side of the central axis (X0) of the first lobe and the first reinforcement (9) being designed of an arched-tile shape with a concave aspect directed towards the first lobe.

7. A device as claimed in claim 6, in which the first reinforcement has a bore (10) extending in the third direction (Y1) which is designed to receive a bearing rod (8) permanently joined either to the engine (1) or to the chassis (2), said first reinforcement forming a boss (19) on a level with this bore which projects between the second and third elastomer lobes (20) towards an elastomer stop (21) which is formed in a single piece with these second and third lobes and which is arranged in a recess between these lobes.

8. A device as claimed in any one of the preceding claims in which the first reinforcement (9) is made by moulding and has stops (23,25,27,29,31) which face in two opposite directions parallel with the third direction (Y1) and which co-operate with at least one of the first and second elastomer limiting units (15, 16) in order to restrict relative displacements of the first and second reinforcements parallel with the third direction, these stops being offset from one another perpendicularly to said third direction so that, viewed in a projection parallel with this third direction, said stops to not overlap at any point, which means that the first reinforcement (9) can be moulded in a two-part mould and de-moulded parallel with the third direction.

9. A device as claimed in claim 8, in which the stops (23,27,29,31) frame one of the first and second elastomer limiting units (15,16) in order to restrict relative displacements of the first and second reinforcement parallel with the third direction (Y1).

10. A device as claimed in claim 8, in which the stops (23,25) are disposed on opposing faces (17,18) belonging to the first reinforcement and co-operate one with the first elastomer limiting unit (15) and the other with the second elastomer limiting unit (16) in order to restrict relative displacements of the first and second reinforcements parallel with the third direction (Y1).

11. A motor vehicle comprising an engine (1) coupled with a chassis (2) by at least one torque-damping device (6) as claimed in any one of the preceding claims.
